# EUROPEAN PATENT SPECIFICATION

(11) **EP 0 377 377 B1**
(45) Date of publication and mention of the grant of the patent: **18.11.1993**
(21) Application number: 89403642.5
(22) Date of filing: 22.12.1989
(51) Int. Cl.: H02G 3/06, H01R 13/595

(54) **A cable clamp nut**
Kabelklemmenmutter
Un écrou serre-câble

(30) Priority: 23.12.1988 DK 7202/88
(43) Date of publication of application: 11.07.1990
(73) Proprietor: OLAF JOHANNSEN APS, 6400 Sonderborg (DK)
(72) Inventor: Johannsen, Olaf, DK-6400 Sonderborg (DK)
(74) Representative: Holme, Edvard

(56) References cited:
- WO-A-87/07443
- CH-A- 481 503
- DE-B- 1 019 734
- DE-C- 675 543
- FR-A- 1 118 000

## Description

The invention concerns a cable clamp nut for relieving electric wires or cables and comprising a cable guide nipple with for example a hexagonal screw head and a strain relief bridge for clamping to the nipple a wire or a cable passed through a hole in the nipple by means of two parallel screws arranged at their respective sides of the nipple hole, wherein the screw head has a substantially rectangular in cross-section U-shaped or L-shaped open channel extending transversely to the axis of the nipple hole and intersecting this hole with its bottom at a suitable dept.

Cable clamp nuts of this type are extensively used for electric installations where it is necessary that the wire or cable is to be relieved of strain at the connection. In the conventional cable clamp nuts the relief bridge, when due care is not shown, can very easily be clamped obliquely down over the cable, so that one screw is screwed too far and the other only superficially or not at all into its threaded hole in the nipple. In that case the relief will not take place with appropriate certainty and can, under certain circumstances, yield to a strain load which is then transferred directly to the electric connections with the possibility of these being interrupted and humans or equipment thereby being injured or damaged.

Furthermore, the Swiss Patent Specification No. 481,503 describes a cable clamp nut with a relief bridge for fixing a cable. According to this document the relief bridge moves in an open traverse channel in the screw head, but this channel does not have a parallel guide for preventing the bridge to be clamped obliquely down over the cable.

The object of the invention is therefore to provide a cable clamp nut of the type mentioned in the opening paragraph, so arranged that, under normal circumstances its relief bridge is automatically pulled straight down over the cable during clamping of it.

This is achieved by means of the new and unique features of the present invention in that the channel is formed with a parallel guide extending in the same direction as the screws, for slidably receiving a bridge guide section complementary to said guide.

In an advantageous embodiment of the invention the parallel guide may consist of a plurality of ribs and/or grooves, which, mutually spaced, are provided on at least one of the opposed sides of the U-shaped channel.

Further, in another embodiment of the invention which is particularly suitable for absorbing great moments during clamping of the relief bridge, the parallel guide may consist of a single rib or groove, which is substantially square in cross-section and is provided on at least one of the opposed sides of the U-shaped channel in a width, constituting a considerable portion of the extent of said side transversely to the screw head, and the rib or groove in question may moreover have such a width that its side edges, at the termination in the periphery of the screw head, engage the corresponding side edges on the bridge when the bridge is present in its initial position at the beginning of the clamping of the screws, which are therefore guided as soon as the first screw grips its threaded hole.

Additionally, according to the invention, the bridge may be so arranged that it may be received in two mutually reversed positions in the parallel guide, so that in one case the engagement face is adapted to a relatively thick cable and in the other case to a relatively thin cable. This entails that the same cable clamp nut may be used for wires or cables in a large diameter range.

Finally, according to the invention, the nipple and/or bridge may be made of plastics or a similar material, thereby providing a particularly inexpensive and expedient embodiment of the cable clamp nut.

The invention will be explained more fully by the following description of embodiments just serving as examples and with reference to the drawing, in which
fig. 1 is a side view of a strain relief bridge associated with the cable clamp nut of the invention,
fig. 2 is an end view of the same,
fig. 3 is a side view of an embodiment of a cable guide nipple of the invention,
fig. 4 is an end view of another embodiment of a cable guide nipple of the invention, with an associated strain relief bridge shown in two positions, and
fig. 5 is side view of the same.

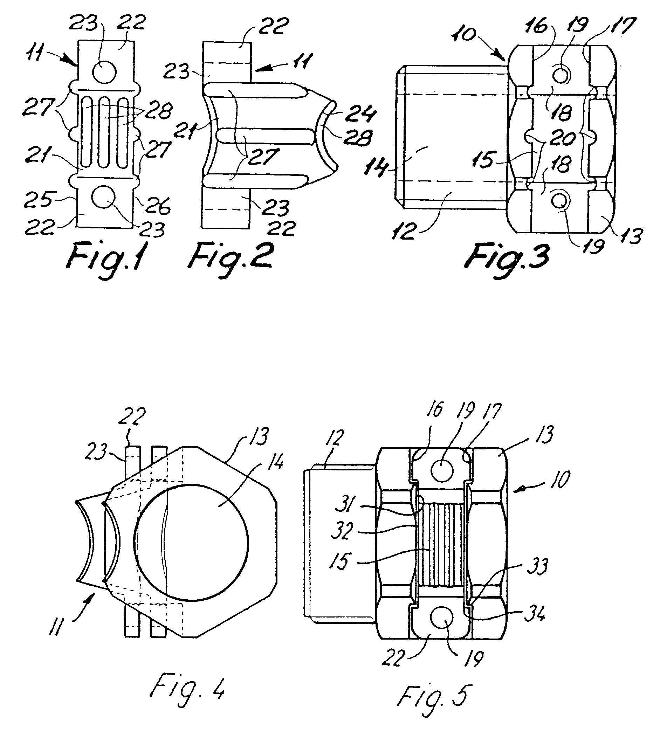

Figs. 1-3 show a first embodiment of a cable clamp nut of the invention which comprises a cable guide nipple generally designated by 10, and a strain relief bridge generally designated by 11. The nipple 10 has a threaded part 12 and a screw head 13 as well as a nipple hole 14 through which it is possible to draw a cable (not shown) to be clamped. A transverse channel 15 is provided in the screw head 13 tranversly to the nipple 10, said transverse channel 15 having a substantially rectangular U-shaped open cross-section and a bottom intersecting the nipple hole 14 at such a great depth that the strain relief bridge 11 can be engaged with the cable through the formed opening. This channel 15 is defined by two opposed sides 16, 17 and a bottom 18 having substantially parallel threaded holes 19, which are arranged at their respective sides of the nipple hole 14 and serve to receive the two parallel screws (not shown) of the cable clamp nut. Each of the two sides 16, 17 of the channel 15 is formed with three grooves 20, which extend in the same direction as the screws and their threaded holes, and which, in combination with the sides 16, 17, form a parallel guide for slidably receiving a guide section with ribs 27 on the bridge 11, said guide section being complementary to said guide.

The bridge 11 may be placed in two positions in the channel 15 of the nipple. In one of these positions it engages a cable with a cylinder face 21 having a relatively large curvature, and in the other with a cylinder face 24 having a relatively small curvature. The same cable clamp nut may therefore be used for wires or cables having widely varying thicknesses. Both of the two cylinder faces 21, 24 are conventionally provided with ribs 28 to intensify the clamping effect. Further, at each side of the guide section of the bridge, the bridge has moreover a protruding attachment ear 22 with a hole 23 through which one of the screws of the cable clamp nut may be passed.

The described structure entails that the strain relief bridge 11 can only be subjected to parallel displacement in one manner in the channel 15 of the nipple during clamping, since the cooperating ribs 27 and grooves 20 serve to absorb any moment that might arise if the screws were not simultaneously screwed into their respective threaded holes.

Another embodiment of the cable clamp nut is shown in figs. 4 and 5, where the same reference numerals are used for the same parts as in figs. 1-3. In this case, a very wide rectangular rib 31 is provided on each of the opposed sides 16, 17 of the transverse channel 15, said rib 31 mating with a wide groove 32 provided in the corresponding face on the guide section of the bridge 11. The wide rib 31 extends outwardly at a greater distance than the nipple hole 14 on the respective channel side 16, 17 so that particularly great moment rigidity is imparted to the parallel guide because of the large moment arm between the respective edges 33, 34 of the ribs 31 and grooves 32.

In fig. 4 the strain relief bridge 11 is shown in two positions, the outermost of which being the initial position at the beginning of the clamping of the screws. As shown, the width of the ribs and the grooves 31, 32 is so adapted that their respective edges 33, 34 are mutually engaged already from the start when the screws are to be clamped.

Both the cable guide nipple 10 and the strain relief bridge 11 can advantageously be made of a suitable plastics material, since under any circumstances the shape of the parallel guide of the cable guide nipple 10 and the guide section of the strain relief bridge 11 imparts sufficient moment ridigity to the cable clamp nut during clamping of the strain relief bridge. Further, also an expedient as well as inexpensive structure is obtained.

## Claims

1. A cable clamp nut for relieving electric wires or cables and comprising a cable guide nipple (10) with for example a hexagonal screw head (13) and a strain relief bridge (11) for clamping to the nipple a wire or a cable passed through a hole (14) in the nipple by means of two parallel screws arranged at their respective sides of the nipple hole (14), wherein the screw head (13) has a substantially rectangular in cross-section U-shaped or L-shaped open channel (15) extending transversely to the axis of the nipple hole (14) and intersecting this hole (14) with its bottom (18) at a suitable depth, characterized in that the channel is formed with a parallel guide (16, 17, 20; 16, 17, 31) extending in the same direction as the screws, for slidably receiving a bridge guide section (27, 32, 34) complementary to said guide.

2. A cable clamp nut according to claim 1, characaterized in that the parallel guide consists of a plurality of ribs and/or grooves (20), which, mutually spaced, are provided on at least one of the opposed sides (16, 17) of the U-shaped channel (15).

3. A cable clamp nut according to claim 1, characterized in that the parallel guide consists of a single rib (31) or groove, which is substantially square in cross-section and is provided on at least one of the opposed sides (16, 17) of the U-shaped channel (15) in a width constituting a considerable portion of the extent of said side (16, 17) transversly to the screw head.

4. A cable clamp nut according to claim 3, characterized in that the rib (31) or the groove has such a width that its side edges, at the termination in the periphery of the screw head (13), engage the corresponding side edges (34) on the bridge (11) when said bridge is present in its initial position at the beginning of the clamping of the screws.

5. A cable clamp nut according to one or more of the claims 1-4, characterized in that the bridge (11) is so arranged that it may be received in two mutually reversed positions in the parallel guide, so that in one case the engagement face (21) of the bridge (11) is adapted to a relatively thick cable and in the other (24) to a relatively thin cable.

6. A cable clamp nut according to one or more of the claims 1-5, characterized in that the nipple (10) and/or the bridge (11) is made of plastics or a similar material.

## Patentansprüche

1. Eine Kabelklemmenmutter zur Zugentlastung elektrischer Leitungen oder Kabel, die einen Kabel-Führungsnippel (10), zum Beispiel mit Sechskantschraubenkopf (13), sowie eine Zugentlastungsbrücke (11) umfaßt, mit der eine durch ein Loch (14) im Nippel geführte Leitung oder ein Kabel mittels zweier parallel angeordneter Schrauben an den jeweiligen Seiten des Nippelloches (14) gegen den Nippel geklemmt wird, wobei der Schraubenkopf (13) einen im wesentlichen rechteckigen, im Querschnitt U-förmigen oder L-förmigen, offenen Kanal (15) aufweist, der sich quer zur Achse des Nippelloches (14) erstreckt und dieses mit seiner Grundfläche (18) in einer geeigneten Tiefe schneidet, dadurch gekennzeichnet, daß der Kanal mit einer Parallelführung (16, 17, 20; 16, 17, 31) ausgebildet ist, welche sich in der gleichen Richtung wie die Schrauben erstreckt, um einen Brücken-Führungsteil (27, 32, 34) gleitend aufzunehmen, der komplementär zu der Führung ist.

2. Eine Kabelklemmenmutter gemäß Anspruch 1, dadurch gekennzeichnet, daß die Parallelführung aus mehreren Rippen und/oder Nuten (20) besteht, welche in gegenseitigem Abstand wenigstens an einer der gegenüberliegenden Seiten (16, 17) des U-förmigen Kanals (15) vorhanden sind.

3. Eine Kabelklemmenmutter gemäß Anspruch 1, dadurch gekennzeichnet, daß die Parallelführung aus einer einzelnen Rippe (31) oder Nut besteht, die im Querschnitt im wesentlichen quadratisch geformt ist und wenigstens in einer der gegenüberliegenden Seiten (16, 17) des U-förmigen Kanals (15) in einer Breite vorhanden ist, die einen beträchtlichen Teil der Ausdehnung der Seite (16, 17) quer zum Schraubenkopf ausmacht.

4. Eine Kabelklemmenmutter gemäß Anspruch 3, dadurch gekennzeichnet, daß die Rippe (31) oder Nut so breit ist, daß deren Seitenkanten an dem bei der Umfangsfläche des Schraubenkopfes (13) befindlichen Ende in die entsprechenden Seitenkanten (34) der Brücke (11) greifen, wenn sich die Brücke in ihrer Ausgangsposition am Anfang des Anziehens der Schrauben befindet.

5. Eine Kabelklemmenmutter gemäß einem oder mehreren der Ansprüche 1 bis 4, dadurch gekennezeichnet, daß die Brücke (11) so angeordnet ist, daß sie von der Parallelführung in zwei zueinander entgegengesetzten Positionen aufgenommen werden kann, so daß im einen Fall die Greiffläche (21) der Bücke (11) für ein relativ dickes Kabel und im anderen Fall die Greiffläche (24) für ein relativ dünnes Kabel geeignet ist.

6. Eine Kabelklemmenmutter gemäß einem oder mehreren der Ansprüche 1 bis 5, dadurch gekennzeichnet, daß der Nippel (10) und/oder die Brücke (11) aus Kunststoff oder einem ähnlichen Material hergestellt ist.

## Revendications

1. Ecrou serre-câble destiné à éviter d'imposer des contraintes aux fils ou câbles électriques et comprenant un téton guide-câble (10) qui possède, par exemple, une tête de vis hexagonale (13) et un pontet de sûreté (11) servant à bloquer sur le téton un fil ou un câble passé à travers une lumière (14) du téton, au moyen de deux vis parallèles disposées sur les côtés respectifs de la lumière (14) du téton, dans lequel la tête de vis (13) possède une gorge ouverte (15), en forme de U ou de L, sensiblement rectangulaire en section transversale, qui s'étend transversalement à l'axe de la lumière (14) du téton et coupe cette lumière (14) par son fond (18), à une profondeur appropriée, caractérisé en ce que la gorge est munie d'un guidage parallèle (16, 17, 20 ; 16, 17, 31) s'étendant dans la même direction que les vis, pour recevoir à coulissement une section (27, 32, 34) de guidage du pontet qui est complémentaire dudit guidage.

2. Ecrou serre-câble selon la revendication 1, caractérisé en ce que le guidage parallèle est composé d'une série de nervures et/ou de rainures (20) qui, mutuellement espacées, sont prévues sur au moins l'un des flancs opposés (16, 17) de la gorge (15) en forme de U.

3. Ecrou serre-câble selon la revendication 1, caractérisé en ce que le guidage parallèle est composé d'une unique nervure (31) ou rainure, qui est sensiblement carrée en section transversale, et est prévu sur au moins un des flancs opposés (16, 17) de la gorge (15) en forme de U, avec une largeur qui représente une proportion considérable de la dimension dudit flanc (16, 17) transversalement à la tête de vis.

4. Ecrou serre-câble selon la revendication 3, caractérisé en ce que la nervure (31) ou la rainure a une largeur telle que ses bords latéraux, à sa terminaison dans la périphérie de la tête de vis (13), entrent en contact avec les bords latéraux correspondants (34) du pontet (11) lorsque le pontet est présent dans sa position initiale au début du serrage des vis.

5. Ecrou serre-câble selon une ou plusieurs des revendications 1 à 4, caractérisé en ce que le pontet (11) est agencé de manière à pouvoir être reçu dans le guidage parallèle dans deux positions inverses l'un de l'autre, de sorte que, dans un cas, la face d'attaque (21) du pontet (11) est adaptée pour un câble relativement gros et que, dans l'autre cas (24), à un câble relativement fin.

6. Ecrou serre-câble selon une ou plusieurs des revendications 1 à 5, caractérisé en ce que le téton (10) et/ou le pontet (11) sont faits d'une matière plastique ou d'une matière similaire.
